(19) **Europäisches Patentamt European Patent Office Office européen des brevets**

(11) **EP 4 703 974 A1**

(12) **EUROPEAN PATENT APPLICATION**
published in accordance with Art. 153(4) EPC

(43) Date of publication:
04.03.2026 Bulletin 2026/10

(21) Application number: 23938528.9

(22) Date of filing: 25.05.2023

(51) International Patent Classification (IPC):
*G06N 3/096* (2023.01)

(52) Cooperative Patent Classification (CPC):
G06N 3/096

(86) International application number:
PCT/JP2023/019481

(87) International publication number:
WO 2024/241566 (28.11.2024 Gazette 2024/48)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: MITSUBISHI ELECTRIC
CORPORATION
Chiyoda-ku
Tokyo 100-8310 (JP)

(72) Inventor: AIHARA Ryo
Tokyo 100-8310 (JP)

(74) Representative: Pfenning, Meinig & Partner mbB
Patent- und Rechtsanwälte
An der Frauenkirche 20
01067 Dresden (DE)

(54) **LEARNING DEVICE, TRAINING METHOD, AND TRAINING PROGRAM**

(57) A learning device (100) includes an acquisition unit (110) that acquires a clean signal, a mixture signal and a source domain teacher learned model (11), an extraction unit (130) that extracts a clean feature value by using the clean signal, an estimation unit (140) that estimates a teacher vector representation by using the source domain teacher learned model (11) and the clean feature value, an extraction unit (150) that extracts a mixture feature value by using the mixture signal, an estimation unit (160) that estimates a student vector representation by using a student learning model (12) and the mixture feature value, a calculation unit (170) that calculates a value based on the teacher vector representation and the student vector representation, and a learning unit (180) that learns the student learning model (12) by using the value so that estimation by the student learning model (12) becomes closer to estimation by the source domain teacher learned model (11).

FIG. 3

EP 4 703 974 A1

## Description

## TECHNICAL FIELD

The present disclosure relates to a learning device, a learning method and a learning program.

## BACKGROUND ART

There are cases where a learned model is used for signal processing. There are cases where the learned model is learned in a plurality of environments. The first learning environment is hereinafter referred to as a source domain. A learning environment after the source domain is referred to as an application domain. There are cases where a learned model obtained by performing the learning in the source domain is relearned in the application domain. When the source domain and the application domain differ from each other, estimation accuracy of the learned model obtained by performing the learning in the source domain can deteriorate significantly. Such a phenomenon is referred to as catastrophic forgetting. Therefore, according to Non-patent Reference 1, a neural network is not entirely updated but partially updated. By this, the catastrophic forgetting is prevented.

## PRIOR ART REFERENCE

## PATENT REFERENCE

Patent Reference 1: WO 2016/143125

## NON-PATENT REFERENCE

Non-patent Reference 1: Yuki Takashima et al., "Preventing Catastrophic Forgetting by Partial Fine-tuning for Continual Learning of End-to-End ASR", Proceedings of the Autumn Meeting of the Acoustical Society of Japan, 2022
Non-patent Reference 2: Ashish Vaswani et al., "Attention Is All You Need", in Proc. IPS, 2017
Non-patent Reference 3: Ryo Aihara et al., "Deep clustering-based single-channel speech separation and recent advances", Acoust. Sci. & Tech. 41, 2, 2020
Non-patent Reference 4: Ethan Perez et al., "FiLM: Visual Reasoning with a General Conditioning Layer", in Proc. AAAI, 20018

## SUMMARY OF THE INVENTION

## PROBLEM TO BE SOLVED BY THE INVENTION

In the partial update proposed in the Non-patent Reference 1, a signal as learning data and a label are associated with each other and supervised learning is performed. However, the work of associating the label with the signal is performed by a person. Therefore, the load on the person is heavy. Accordingly, the method proposed in the Non-patent Reference 1 cannot be considered to be the optimum.

An object of the present disclosure is to prevent the catastrophic forgetting without using a label.

## MEANS FOR SOLVING THE PROBLEM

A learning device according to an aspect of the present disclosure is provided. The learning device performs learning in an application domain as a learning environment after a source domain as a learning environment. The learning device includes an acquisition unit that acquires a first clean signal, a mixture signal as a signal of a mixture of the first clean signal and a noise signal, and a source domain teacher learned model as a learned model obtained by performing learning in the source domain, a first extraction unit that extracts a clean feature value as a feature value of the first clean signal by using the first clean signal, a first estimation unit that estimates a teacher vector representation as a representation obtained by representing information as aggregation of the clean feature value in vector representation by using the source domain teacher learned model and the clean feature value, a second extraction unit that extracts a mixture feature value as a feature value of the mixture signal by using the mixture signal, a second estimation unit that estimates a student vector representation as a representation obtained by representing information as aggregation of the mixture feature value in vector representation by using a student learning model whose initial state is a same state as the source domain teacher learned model and the mixture feature value, a calculation unit that calculates a value based on the teacher vector representation and the student vector representation, and a learning unit that learns the student learning model by using the value so that estimation by the student learning model becomes closer to estimation by the source domain teacher learned model.

## EFFECT OF THE INVENTION

According to the present disclosure, the catastrophic forgetting can be prevented without using a label.

## BRIEF DESCRIPTION OF THE DRAWINGS

Fig. 1 is a diagram showing a signal processing system in a first embodiment.
Fig. 2 is a diagram showing hardware included in a learning device in the first embodiment.
Fig. 3 is a block diagram showing functions of the learning device in the first embodiment.

Fig. 4 is a flowchart showing an example of a process executed by the learning device in the first embodiment.

Fig. 5 is a block diagram showing functions of an estimation device in the first embodiment.

Fig. 6 is a flowchart showing an example of a process executed by the estimation device in the first embodiment.

Fig. 7 is a block diagram showing functions of a learning device in a second embodiment.

Fig. 8 is a flowchart showing an example of a process executed by the learning device in the second embodiment.

Fig. 9 is a block diagram showing functions of a learning device in a third embodiment.

Fig. 10 is a flowchart showing an example of a process executed by the learning device in the third embodiment.

Fig. 11 is a block diagram showing functions of an estimation device in the third embodiment.

Fig. 12 is a flowchart showing an example of a process executed by the estimation device in the third embodiment.

Fig. 13 is a block diagram showing functions of a learning device in a fourth embodiment.

Fig. 14 is a flowchart showing an example of a process executed by the learning device in the fourth embodiment.

Fig. 15 is a block diagram showing functions of an estimation device in the fourth embodiment.

Fig. 16 is a flowchart showing an example of a process executed by the estimation device in the fourth embodiment.

## MODE FOR CARRYING OUT THE INVENTION

Embodiments will be described below with reference to the drawings. The following embodiments are just examples and a variety of modifications are possible within the scope of the present disclosure.

First Embodiment

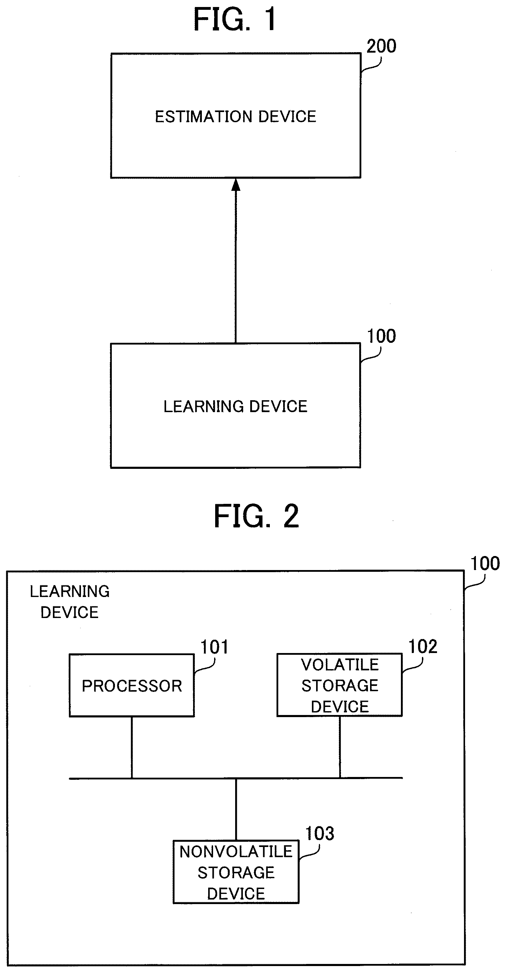

Fig. 1 is a diagram showing a signal processing system in a first embodiment. The signal processing system includes a learning device 100 and an estimation device 200. The learning device 100 is a device that executes a learning method.

Next, hardware included in the learning device 100 will be described below.

Fig. 2 is a diagram showing the hardware included in the learning device in the first embodiment. The learning device 100 is a computer. The learning device 100 includes a processor 101, a volatile storage device 102 and a nonvolatile storage device 103.

The processor 101 controls the whole of the learning device 100. The processor 101 is a Central Processing Unit (CPU), a Field Programmable Gate Array (FPGA) or the like, for example. The processor 101 can also be a multiprocessor. Further, the learning device 100 may include processing circuitry.

The volatile storage device 102 is main storage of the learning device 100. The volatile storage device 102 is a Random Access Memory (RAM), for example. The nonvolatile storage device 103 is auxiliary storage of the learning device 100. The nonvolatile storage device 103 is a Hard Disk Drive (HDD) or a Solid State Drive (SSD), for example. Further, a storage area reserved in the volatile storage device 102 or the nonvolatile storage device 103 is referred to as a storage unit.

The estimation device 200 includes a processor, a volatile storage device and a nonvolatile storage device similarly to the learning device 100.

In the following, a learning phase and a utilization phase will be described. In the learning phase, the learning device 100 will be described. In the utilization phase, the estimation device 200 will be described.

<Learning Phase>

Next, functions included in the learning device 100 will be described below.

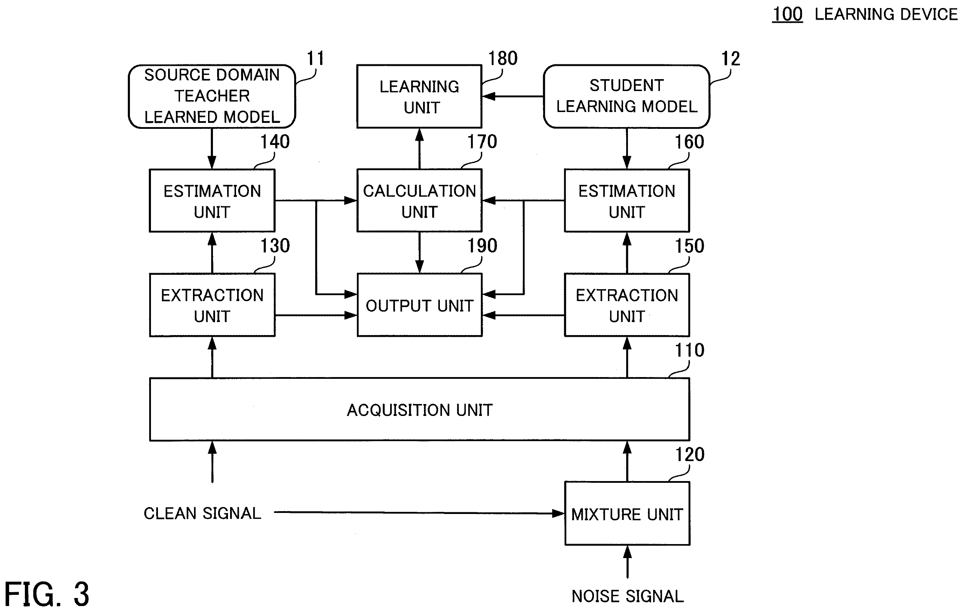

Fig. 3 is a block diagram showing the functions of the learning device in the first embodiment. The learning device 100 includes an acquisition unit 110, a mixture unit 120, an extraction unit 130, an estimation unit 140, an extraction unit 150, an estimation unit 160, a calculation unit 170, a learning unit 180 and an output unit 190. Further, the extraction unit 130 is referred to also as a first extraction unit. The estimation unit 140 is referred to also as a first estimation unit. The extraction unit 150 is referred to also as a second extraction unit. The estimation unit 160 is referred to also as a second estimation unit.

Part or all of the acquisition unit 110, the mixture unit 120, the extraction unit 130, the estimation unit 140, the extraction unit 150, the estimation unit 160, the calculation unit 170, the learning unit 180 and the output unit 190 may be implemented by processing circuitry. Further, part or all of the acquisition unit 110, the mixture unit 120, the extraction unit 130, the estimation unit 140, the extraction unit 150, the estimation unit 160, the calculation unit 170, the learning unit 180 and the output unit 190 may be implemented as modules of a program executed by the processor 101. For example, the program executed by the processor 101 is referred to also as a learning program. The learning program has been recorded in a record medium, for example.

The acquisition unit 110 acquires a clean signal and a mixture signal. For example, the acquisition unit 110 acquires the clean signal and the mixture signal from the storage unit. Alternatively, for example, the acquisition unit 110 acquires the clean signal and the mixture signal from an external device. Incidentally, the external device is a device existing outside the learning device 100. The external device is a cloud server, for example.

Illustration of the external device is left out.

The clean signal is a signal including no noise signal. The clean signal is referred to also as a first clean signal. The mixture signal is a signal of a mixture of a clean signal and a noise signal.

Here, the acquisition unit 110 may acquire a mixture signal generated by the mixture unit 120 as will be described later. Further, in cases where the acquisition unit 110 acquires the mixture signal from the storage unit or an external device, the learning device 100 does not need to include the mixture unit 120.

Further, the acquisition unit 110 acquires a source domain teacher learned model 11 from the storage unit or the external device. The source domain teacher learned model 11 is a learned model obtained by performing the learning in the source domain. The source domain teacher learned model 11 is a neural network formed with a plurality of layers. The source domain teacher learned model 11 may employ a method like Long Short-Term Memory (LSTM), a method as a combination of one-dimensional convolution operations, or a transformer described in Non-patent Reference 2. Incidentally, there is no restriction on the number of layers.

An initial state of a student learning model 12 drawn in Fig. 3 is the same state as the source domain teacher learned model 11. The student learning model 12 performs learning as will be described later. By the learning, the student learning model 12 shifts to a state different from the source domain teacher learned model 11. Further, the learning is performed in a learning environment after the source domain. Therefore, the learning environment of the learning performed by the learning device 100 is an application domain. Further, the application domain is an environment different from the source domain.

The mixture unit 120 generates the mixture signal by using the clean signal and the noise signal. Incidentally, the noise signal has been stored in the storage unit or the external device, for example.

The extraction unit 130 extracts a clean feature value as a feature value of the clean signal by using the clean signal. For example, the extraction unit 130 extracts a time series of power spectra, obtained by performing short-term Fourier transform (STFT) on the clean signal, as the clean feature value. Incidentally, this clean feature value is referred to also as a first clean feature value.

The estimation unit 140 estimates a teacher vector representation by using the source domain teacher learned model 11 and the clean feature value. Specifically, when the estimation unit 140 inputs the clean feature value to the source domain teacher learned model 11, the source domain teacher learned model 11 outputs the teacher vector representation.

Here, the teacher vector representation is a representation obtained by representing information as aggregation of the clean feature value in vector representation. Incidentally, the aggregation may be paraphrased as degeneration. Thus, the teacher vector representation may be expressed also as a representation obtained by representing information as degeneration of the clean feature value in vector representation.

The extraction unit 150 extracts a mixture feature value as a feature value of the mixture signal by using the mixture signal. For example, the extraction unit 150 extracts a time series of power spectra, obtained by performing the short-term Fourier transform on the mixture signal, as the mixture feature value.

The estimation unit 160 estimates a student vector representation by using the student learning model 12 and the mixture feature value. Specifically, when the estimation unit 160 inputs the mixture feature value to the student learning model 12, the student learning model 12 outputs the student vector representation. Incidentally, the student vector representation is a representation obtained by representing information as aggregation of the mixture feature value in vector representation.

The calculation unit 170 calculates a value based on the teacher vector representation and the student vector representation. Specifically, the calculation unit 170 calculates the value $L_p$ by using a loss function represented by expression (1).

$$L_p = \|h_N^t - h_N^s\|_p^p \quad \cdots (1)$$

The term $h_N{}^{\wedge t}$ is the teacher vector representation. The term $hN{}^{\wedge s}$ is the student vector representation. Here, "^" (hat) is a symbol representing the power (exponent). When "P = 1", the value $L_1$ represents an L1 norm. When "P = 2", the value $L_2$ represents an L2 norm.

The loss function is described in Non-patent Reference 3. Further, this value $L_p$ may be referred to also as an error or a loss.

The learning unit 180 learns the student learning model 12 by using the calculated value (i.e., the value $L_p$) so that the estimation by the student learning model 12 becomes closer to the estimation by the source domain teacher learned model 11. In other words, the learning unit 180 learns the student learning model 12 by using the value so that the vector representation outputted by the student learning model 12 becomes closer to the vector representation outputted by the source domain teacher learned model 11. For example, the learning unit 180 executes a process by using the student learning model 12, the calculated value, and an optimization technique such as Adaptive moment (Adam), and thereafter adjusts weight coefficients of the student learning model 12 based on error back propagation. Further, for example, the learning unit 180 learns the student learning model 12 so that the calculated value becomes less than or equal to a predetermined threshold value.

The output unit 190 outputs the clean feature value, the teacher vector representation, the mixture feature value, the student vector representation, and the value calculated by the calculation unit 170. For example, the output unit 190 outputs the clean feature value and the other data to a display connectable to the learning device 100. For example, due to output the clean feature value and the other data to the display, a user recognizes the status of the learning.

Next, a process executed by the learning device 100 will be described below by using a flowchart.

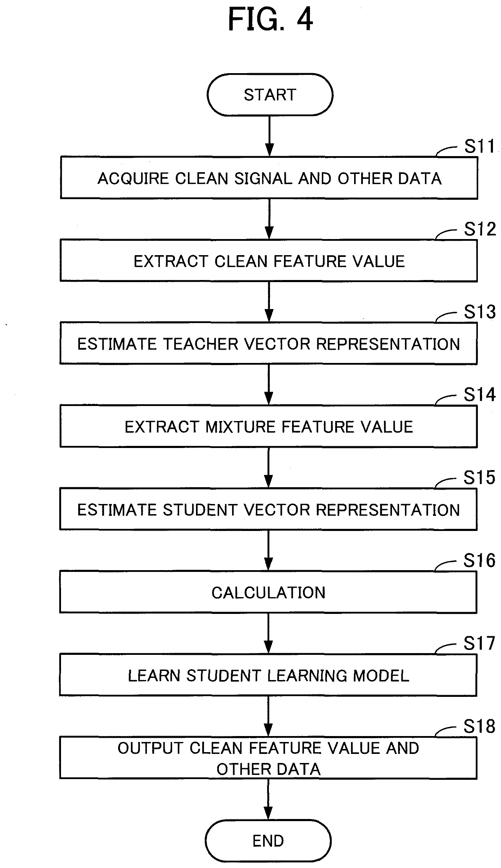

Fig. 4 is a flowchart showing an example of the process executed by the learning device in the first embodiment.

(Step S11) The acquisition unit 110 acquires the clean signal, the mixture signal and the source domain teacher learned model 11.

(Step S12) The extraction unit 130 extracts the clean feature value by using the clean signal.

(Step S13) The estimation unit 140 estimates the teacher vector representation by using the source domain teacher learned model 11 and the clean feature value.

(Step S14) The extraction unit 150 extracts the mixture feature value by using the mixture signal.

(Step S15) The estimation unit 160 estimates the student vector representation by using the student learning model 12 and the mixture feature value.

(Step S16) The calculation unit 170 calculates the value based on the teacher vector representation and the student vector representation.

(Step S17) The learning unit 180 learns the student learning model 12 by using the calculated value.

(Step S18) The output unit 190 outputs the clean feature value, the teacher vector representation, the mixture feature value, the student vector representation, and the value calculated by the calculation unit 170.

Incidentally, the order of executing the steps S12 to S15 may differ from the order of execution in Fig. 4.

The learning device 100 may repeat the process in Fig. 4 by using a different clean signal and a different mixture signal. For example, the learning device 100 repeatedly learns the student learning model 12 until the value outputted by the calculation unit 170 becomes less than or equal to a predetermined threshold value. Accordingly, the student learning model 12 is learned a plurality of times. For example, after the learning is finished, the learning device 100 transmits the student learning model 12 to the estimation device 200.

According to the first embodiment, the learning device 100 learns the student learning model 12 in the application domain. Therefore, the influence of the application domain is incorporated into the estimation by the student learning model 12. Further, the learning device 100 learns the student learning model 12 so that the estimation by the student learning model 12 becomes closer to the estimation by the source domain teacher learned model 11. Therefore, the influence of the source domain remains in the estimation by the student learning model 12. Furthermore, the learning device 100 performs the learning without using a label. Accordingly, the learning device 100 is capable of preventing the catastrophic forgetting without using a label.

Next, an example of the utilization phase in the first embodiment will be described below.

<Utilization Phase>

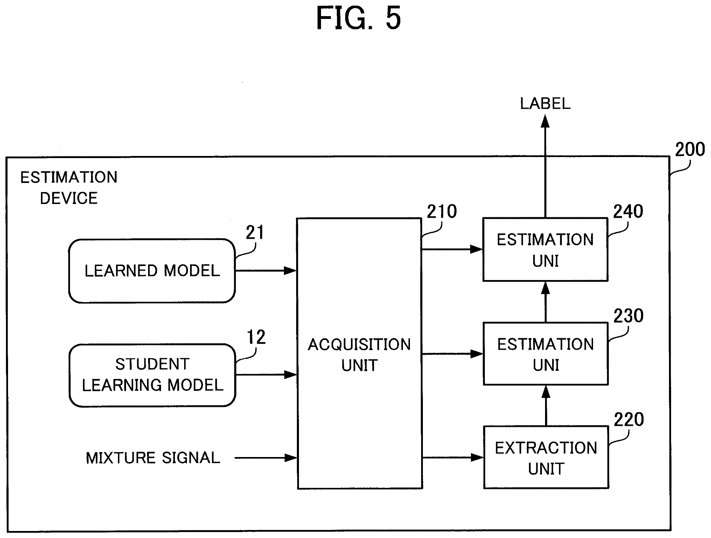

Fig. 5 is a block diagram showing functions of the estimation device in the first embodiment. The estimation device 200 includes an acquisition unit 210, an extraction unit 220, an estimation unit 230 and an estimation unit 240.

Part or all of the acquisition unit 210, the extraction unit 220, the estimation unit 230 and the estimation unit 240 may be implemented by processing circuitry included in the estimation device 200. Further, part or all of the acquisition unit 210, the extraction unit 220, the estimation unit 230 and the estimation unit 240 may be implemented as modules of a program executed by a processor included in the estimation device 200.

The acquisition unit 210 acquires a mixture signal. For example, the acquisition unit 210 acquires the mixture signal from a volatile storage device or a nonvolatile storage device included in the estimation device 200. Alternatively, for example, the acquisition unit 210 acquires the mixture signal from an external device.

The acquisition unit 210 acquires the student learning model 12 from the learning device 100. Here, the student learning model 12 may be referred to also as an encoding neural network.

The acquisition unit 210 acquires a learned model 21. For example, the acquisition unit 210 acquires the learned model 21 from the volatile storage device or the nonvolatile storage device included in the estimation device 200. Alternatively, for example, the acquisition unit 210 acquires the learned model 21 from an external device. Here, the learned model 21 may be referred to also as a decoding neural network.

The extraction unit 220 extracts a mixture feature value as a feature value of the mixture signal by using the mixture signal. For example, the extraction unit 220 extracts a time series of power spectra, obtained by performing the short-term Fourier transform on the mixture signal, as the mixture feature value.

The estimation unit 230 estimates a vector representation by using the student learning model 12 and the mixture feature value. Specifically, when the estimation unit 230 inputs the mixture feature value to the student learning model 12, the student learning model 12 outputs the vector representation. Incidentally, this vector representation is a representation obtained by representing information as aggregation of the mixture feature value in vector representation.

The estimation unit 240 estimates a label by using the learned model 21 and the vector representation. The label is information estimated based on the information as aggregation of the mixture feature value. For example, when the mixture signal is speech and the estimation device 200 executes speech recognition, the label is a character string indicating the contents of the speech. Further, for example, when the mixture signal is voice and the estimation device 200 executes emotion estimation, the label is information indicating an emotion estimated from the voice.

Next, a process executed by the estimation device 200 will be described below by using a flowchart.

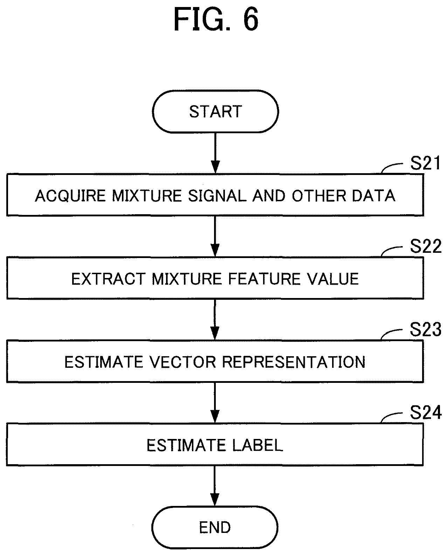

Fig. 6 is a flowchart showing an example of the process executed by the estimation device in the first embodiment.

(Step S21) The acquisition unit 210 acquires the mixture signal, the student learning model 12 and the learned model 21.

(Step S22) The extraction unit 220 extracts the mixture feature value by using the mixture signal.

(Step S23) The estimation unit 230 estimates the vector representation by using the student learning model 12 and the mixture feature value.

(Step S24) The estimation unit 240 estimates the label by using the learned model 21 and the vector representation.

Second Embodiment

Next, a second embodiment will be described below. In the second embodiment, the description will be given mainly of features different from those in the first embodiment. In the second embodiment, the description is omitted for features in common with the first embodiment.

<Learning Phase>

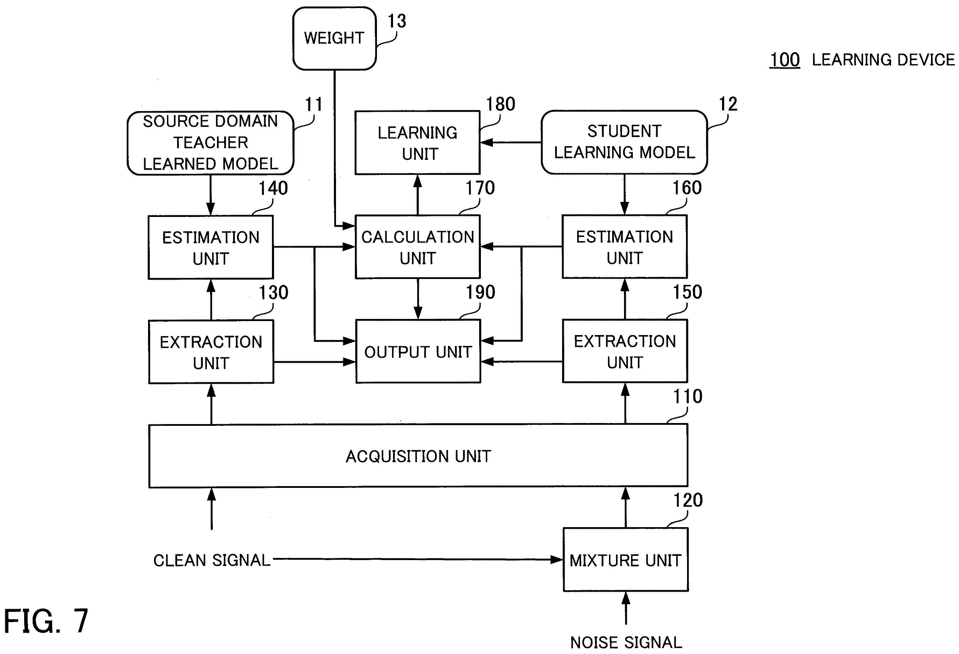

Fig. 7 is a block diagram showing functions of a learning device in the second embodiment. The acquisition unit 110 acquires a weight 13 corresponding to the noise signal included in the mixture signal. Specifically, the acquisition unit 110 acquires the weight 13 from the storage unit or the external device. For example, when the noise signal is sound of flowing water, the weight 13 is a weight corresponding to the sound of the flowing water. For example, when the noise signal is sound of a traveling car, the weight 13 is a weight corresponding to the sound of the traveling car.

The calculation unit 170 calculates a value based on the weight 13, the teacher vector representation and the student vector representation. Specifically, the calculation unit 170 calculates the value $L_p$ by using a loss function represented by expression (2).

$$L_p = \sum_{x=1}^{Y} \lambda_x \left\| h_{xN}^t - h_{xN}^s \right\|_p^p \quad \cdots (2)$$

Incidentally, the weight 13 is $\lambda_x$. The weight $\lambda_x$ is a weight corresponding to the x-th noise signal among Y types of noise signals. The term $h_{xN}{}^{\wedge s}$ is the student vector representation estimated by using the mixture feature value of the mixture signal including the x-th noise signal. The term $h_{xN}{}^{\wedge t}$ is the teacher vector representation corresponding to the student vector representation. Here, "$\wedge$" (hat) is the symbol representing the power (exponent).

Next, a process executed by the learning device 100 will be described below by using a flowchart.

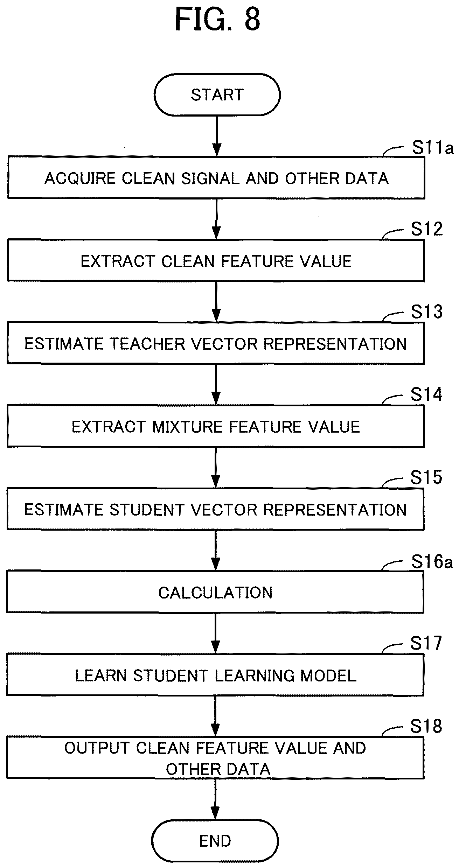

Fig. 8 is a flowchart showing an example of the process executed by the learning device in the second embodiment. The process in Fig. 8 differs from the process in Fig. 4 in that steps S11a and S16a are executed. Thus, the steps S11a and S16a in Fig. 8 will be described below. Then, the description will be omitted for processing other than the steps S11a and S16a.

(Step S11a) The acquisition unit 110 acquires the clean signal, the mixture signal, the source domain teacher learned model 11 and the weight 13.

(Step S16a) The calculation unit 170 calculates the value based on the weight 13, the teacher vector representation and the student vector representation.

According to the second embodiment, by using the weight 13, the learning device 100 is capable of appropriately performing the learning dependent on the noise signal.

Third Embodiment

Next, a third embodiment will be described below. In the third embodiment, the description will be given mainly of features different from those in the first embodiment. In the third embodiment, the description is omitted for features in common with the first embodiment.

<Learning Phase>

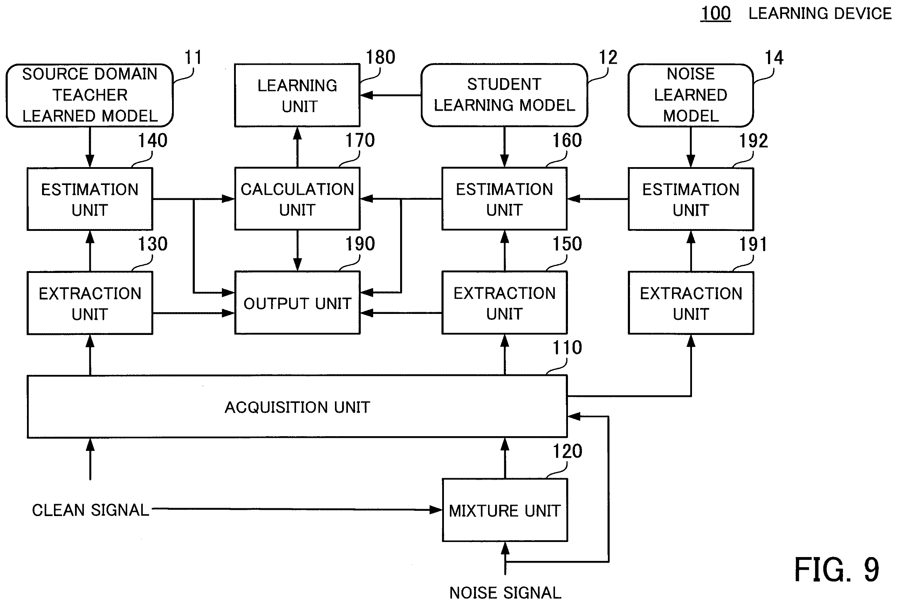

Fig. 9 is a block diagram showing functions of a learning device in the third embodiment. The learning device 100 further includes an extraction unit 191 and an estimation unit 192. The extraction unit 191 is referred to also as a third extraction unit. The estimation unit 192 is referred to also as a third estimation unit.

Part or all of the extraction unit 191 and the estimation unit 192 may be implemented by processing circuitry. Further, part or all of the extraction unit 191 and the estimation unit 192 may be implemented as modules of a program executed by the processor 101.

The acquisition unit 110 acquires a noise signal from the storage unit or the external device. This noise signal is the same as the noise signal included in the mixture signal.

The acquisition unit 110 acquires a noise learned model 14 from the storage unit or the external device.

The extraction unit 191 extracts a noise feature value as a feature value of the noise signal by using the noise signal. For example, the extraction unit 191 extracts a time series of power spectra, obtained by performing the short-term Fourier transform on the noise signal, as the noise feature value.

The estimation unit 192 estimates a noise vector representation by using the noise learned model 14 and the noise feature value. Specifically, when the estimation unit 192 inputs the noise feature value to the noise learned model 14, the noise learned model 14 outputs the noise vector representation. Incidentally, the noise vector representation is a representation obtained by representing information as aggregation of the noise feature value in vector representation.

The estimation unit 160 estimates the student vector representation by using the student learning model 12, the mixture feature value and the noise vector representation. Specifically, when the estimation unit 160 inputs the mixture feature value and the noise vector representation to the student learning model 12, the student learning model 12 outputs the student vector representation. Here, by the input of the noise vector representation thereto, the student learning model 12 is capable of determining which information in the mixture feature value is relevant to the noise signal. Thus, the student learning model 12 estimates the student vector representation while determining the information relevant to the noise signal.

Further, the estimation unit 160 may use a method described in Non-patent Reference 4 when inputting the mixture feature value and the noise vector representation to the student learning model 12.

Next, a process executed by the learning device 100 will be described below by using a flowchart.

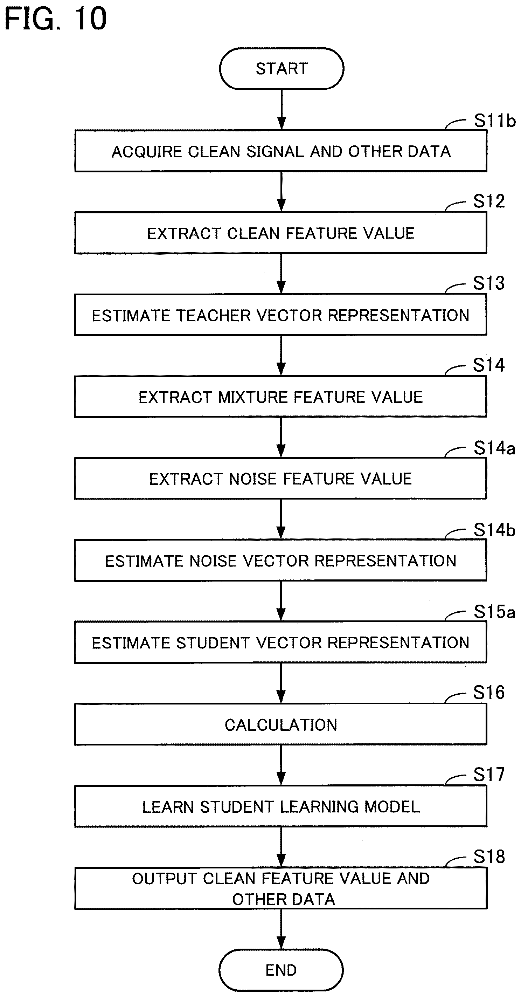

Fig. 10 is a flowchart showing an example of the process executed by the learning device in the third embodiment. The process in Fig. 10 differs from the process in Fig. 4 in that steps S11b, S14a, S14b and S15a are executed. Thus, the steps S11b, S14a, S14b and S15a in Fig. 10 will be described below. Then, the description will be omitted for processing other than the steps S11b, S14a, S14b and S15a.

(Step S11b) The acquisition unit 110 acquires the clean signal, the mixture signal, the source domain teacher learned model 11, the noise signal and the noise learned model 14.

(Step S14a) The extraction unit 191 extracts the noise feature value by using the noise signal.

(Step S14b) The estimation unit 192 estimates the noise vector representation by using the noise learned model 14 and the noise feature value.

(Step S15a) The estimation unit 160 estimates the student vector representation by using the student learning model 12, the mixture feature value and the noise vector representation.

Incidentally, the order of executing the steps S12 to S15a may differ from the order of execution in Fig. 10.

According to the third embodiment, robustness of the student learning model 12 increases. Further, the student learning model 12 is capable of estimating the noise more accurately by the learning.

Next, an example of the utilization phase in the third embodiment will be described below.

<Utilization Phase>

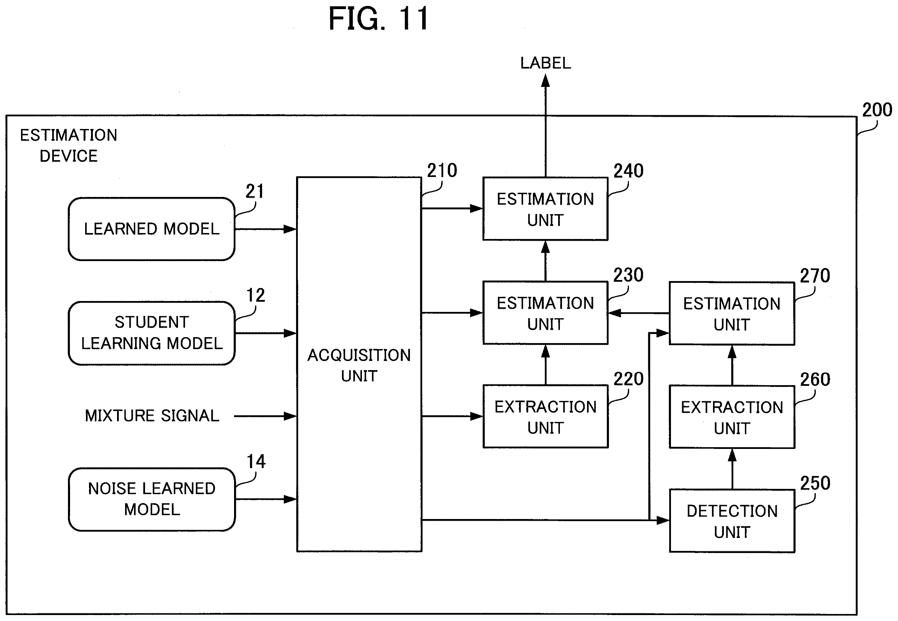

Fig. 11 is a block diagram showing functions of an estimation device in the third embodiment. The estimation device 200 further includes a detection unit 250, an extraction unit 260 and an estimation unit 270.

Part or all of the detection unit 250, the extraction unit 260 and the estimation unit 270 may be implemented by processing circuitry included in the estimation device 200. Further, part or all of the detection unit 250, the extraction unit 260 and the estimation unit 270 may be implemented as modules of a program executed by a processor included in the estimation device 200.

The acquisition unit 210 further acquires the noise learned model 14 from a volatile storage device or a nonvolatile storage device included in the estimation device 200.

The detection unit 250 detects the noise signal included in the mixture signal. For example, the detection unit 250 detects the noise signal by using a method described in Patent Reference 1. Alternatively, for example, the detection unit 250 detects the noise signal by using the power of the mixture signal and a threshold value.

The extraction unit 260 extracts the noise feature value as the feature value of the noise signal by using the noise signal. For example, the extraction unit 260 extracts a time series of power spectra, obtained by performing the short-term Fourier transform on the noise signal, as the noise feature value.

The estimation unit 270 estimates the noise vector representation by using the noise learned model 14 and the noise feature value. Specifically, when the estimation unit 270 inputs the noise feature value to the noise learned model 14, the noise learned model 14 outputs the noise vector representation. Incidentally, the noise vector representation is a representation obtained by representing information as aggregation of the noise feature value in vector representation.

The estimation unit 230 estimates a vector representation by using the student learning model 12, the mixture feature value and the noise vector representation. Specifically, when the estimation unit 230 inputs the mixture feature value and the noise vector representation to the student learning model 12, the student learning model 12 outputs the vector representation.

Next, a process executed by the estimation device 200 will be described below by using a flowchart.

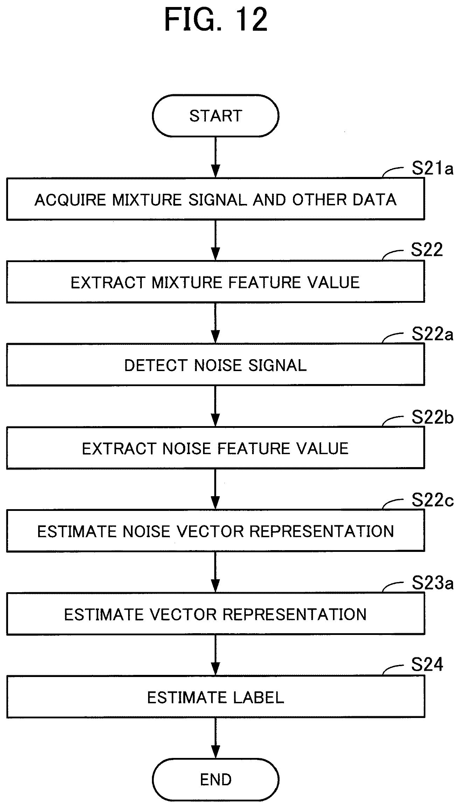

Fig. 12 is a flowchart showing an example of the process executed by the estimation device in the third embodiment. The process in Fig. 12 differs from the process in Fig. 6 in that steps S21a, S22a, S22b, S22c and S23a are executed. Thus, the steps S21a, S22a, S22b, S22c and S23a in Fig. 12 will be described below. Then, the description will be omitted for processing other than the steps S21a, S22a, S22b, S22c and S23a.

(Step S21a) The acquisition unit 210 acquires the mixture signal, the student learning model 12, the learned model 21 and the noise learned model 14.

(Step S22a) The detection unit 250 detects the noise signal included in the mixture signal.

(Step S22b) The extraction unit 260 extracts the noise feature value by using the noise signal.

(Step S22c) The estimation unit 270 estimates the noise vector representation by using the noise learned model 14 and the noise feature value.

(Step S23a) The estimation unit 230 estimates the vector representation by using the student learning model 12, the mixture feature value and the noise vector representation.

Fourth Embodiment

Next, a fourth embodiment will be described below. In the fourth embodiment, the description will be given mainly of features different from those in the first embodiment. In the fourth embodiment, the description is omitted for features in common with the first embodiment.

<Learning Phase>

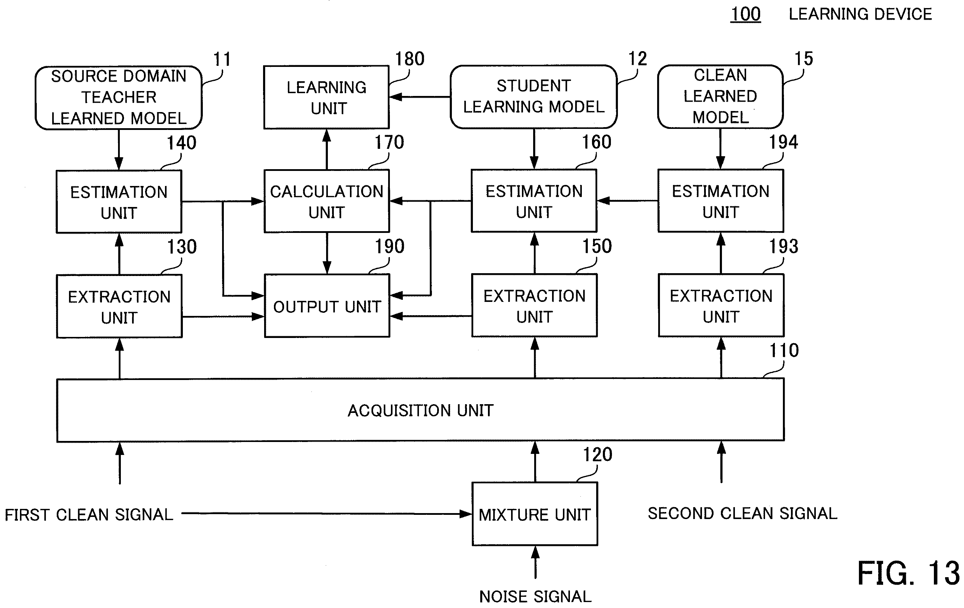

Fig. 13 is a block diagram showing functions of a learning device in the fourth embodiment. The learning device 100 further includes an extraction unit 193 and an estimation unit 194. The extraction unit 193 is referred to also as a fourth extraction unit. The estimation unit 194 is referred to also as a fourth estimation unit.

Part or all of the extraction unit 193 and the estimation unit 194 may be implemented by processing circuitry. Further, part or all of the extraction unit 193 and the estimation unit 194 may be implemented as modules of a program executed by the processor 101.

Here, the clean signal inputted to the extraction unit 130 is referred to as a first clean signal.

The acquisition unit 110 acquires a second clean signal from the storage unit or the external device. The second clean signal is a signal different from the first clean signal. For example, the first clean signal and the second clean signal are sound signals of speeches by the same speaker.

The acquisition unit 110 acquires a clean learned model 15 from the storage unit or the external device.

The extraction unit 193 extracts a second clean feature value as a feature value of the second clean signal by using the second clean signal. For example, the extraction unit 193 extracts a time series of power spectra, obtained by performing the short-term Fourier transform on the second clean signal, as the second clean feature value.

The estimation unit 194 estimates a clean vector representation by using the clean learned model 15 and the second clean feature value. Specifically, when the estimation unit 194 inputs the second clean feature value to the clean learned model 15, the clean learned model 15 outputs the clean vector representation. Incidentally, the clean vector representation is a representation obtained by representing information as aggregation of the second clean feature value in vector representation.

The estimation unit 160 estimates the student vector representation by using the student learning model 12, the mixture feature value and the clean vector representation. Specifically, when the estimation unit 160 inputs the mixture feature value and the clean vector representation to the student learning model 12, the student learning model 12 outputs the student vector representation. Here, by the input of the clean vector representation thereto, the student learning model 12 is capable of determining which information in the mixture feature value is relevant to the clean signal. Thus, the student learning model 12 estimates the student vector representation while determining the information relevant to the clean signal.

Further, the estimation unit 160 may use the method described in the Non-patent Reference 4 when inputting the mixture feature value and the clean vector representation to the student learning model 12.

Next, a process executed by the learning device 100 will be described below by using a flowchart.

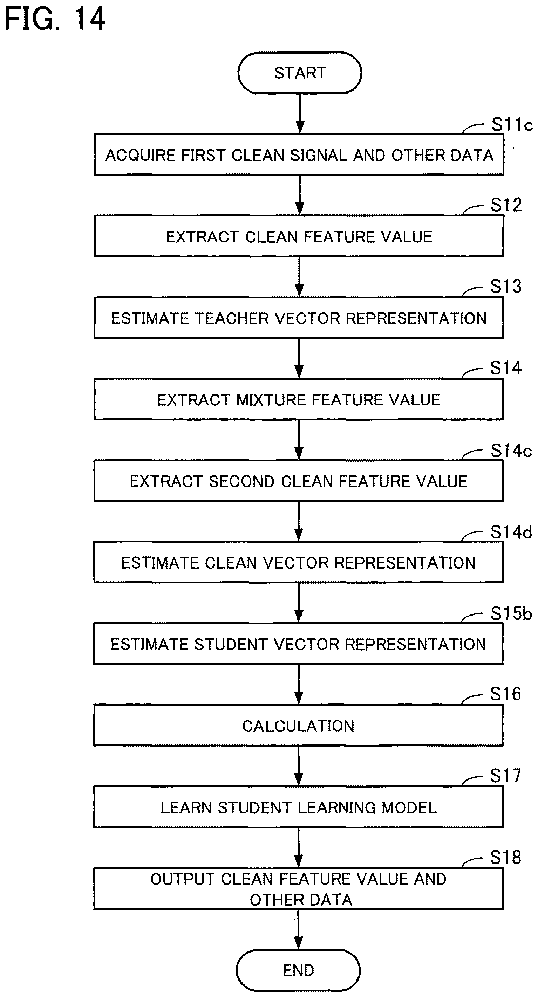

Fig. 14 is a flowchart showing an example of the process executed by the learning device in the fourth embodiment. The process in Fig. 14 differs from the process in Fig. 4 in that steps S11c, S14c, S14d and S15b are executed. Thus, the steps S11c, S14c, S14d and S15b in Fig. 14 will be described below. Then, the description will be omitted for processing other than the steps S11c, S14c, S14d and S15b.

(Step S11c) The acquisition unit 110 acquires the first clean signal, the mixture signal, the source domain teacher learned model 11, the second clean signal and the clean learned model 15.

(Step S14c) The extraction unit 193 extracts the second clean feature value by using the second clean signal.

(Step S14d) The estimation unit 194 estimates the clean vector representation by using the clean learned model 15 and the second clean feature value.

(Step S15b) The estimation unit 160 estimates the student vector representation by using the student learning model 12, the mixture feature value and the clean vector representation.

Incidentally, the order of executing the steps S12 to S15b may differ from the order of execution in Fig. 14.

According to the fourth embodiment, the robustness of the student learning model 12 increases. Further, the student learning model 12 is capable of estimating the clean signal more accurately by the learning. Furthermore, the learning device 100 learns the student learning model 12 by using different clean signals. Therefore, the student learning model 12 is facilitated to estimate which signal is the clean signal even when different contents of speech are inputted.

Next, an example of the utilization phase will be shown below.

<Utilization Phase>

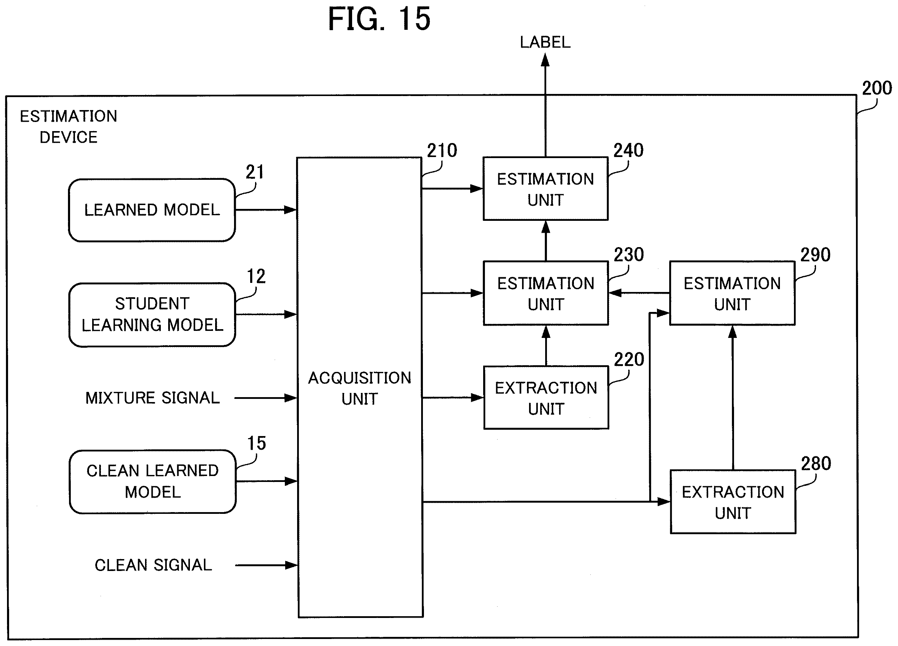

Fig. 15 is a block diagram showing functions of an estimation device in the fourth embodiment. The estimation device 200 further includes an extraction unit 280 and an estimation unit 290.

Part or all of the extraction unit 280 and the estimation unit 290 may be implemented by processing circuitry included in the estimation device 200. Further, part or all of the extraction unit 280 and the estimation unit 290 may be implemented as modules of a program executed by a processor included in the estimation device 200.

The acquisition unit 210 further acquires the clean learned model 15 from a volatile storage device or a nonvolatile storage device included in the estimation device 200.

The acquisition unit 210 further acquires a clean signal from the volatile storage device or the nonvolatile storage device included in the estimation device 200. Incidentally, this clean signal is different from the clean signal included in the mixture signal acquired by the acquisition unit 210.

The extraction unit 280 extracts a clean feature value as a feature value of the clean signal by using the clean signal different from the clean signal included in the mixture signal. For example, the extraction unit 280 extracts a time series of power spectra, obtained by performing the short-term Fourier transform on the clean signal, as the clean feature value.

The estimation unit 290 estimates the clean vector representation by using the clean learned model 15 and the clean feature value. Specifically, when the estimation unit 290 inputs the clean feature value to the clean learned model 15, the clean learned model 15 outputs the clean vector representation. Incidentally, the clean vector representation is a representation obtained by representing information as aggregation of the clean feature value in vector representation.

The estimation unit 230 estimates a vector representation by using the student learning model 12, the mixture feature value and the clean vector representation. Specifically, when the estimation unit 230 inputs the mixture feature value and the clean vector representation to the student learning model 12, the student learning model 12 outputs the vector representation.

Next, a process executed by the estimation device 200 will be described below by using a flowchart.

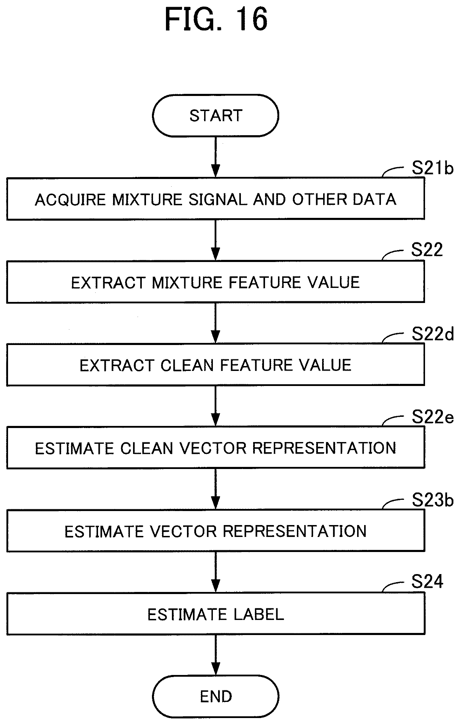

Fig. 16 is a flowchart showing an example of the process executed by the estimation device in the fourth embodiment. The process in Fig. 16 differs from the process in Fig. 6 in that steps S21b, S22d, S22e and S23b are executed. Thus, the steps S21b, S22d, S22e and S23b in Fig. 16 will be described below. Then, the description will be omitted for processing other than the steps S21b, S22d, S22e and S23b.

(Step S21b) The acquisition unit 210 acquires the mixture signal, the student learning model 12, the learned model 21, the clean signal and the clean learned model 15.

(Step S22d) The extraction unit 280 extracts the clean feature value by using the clean signal.

(Step S22e) The estimation unit 290 estimates the clean vector representation by using the clean learned model 15 and the clean feature value.

(Step S23b) The estimation unit 230 estimates the vector representation by using the student learning model 12, the mixture feature value and the clean vector representation.

Features in the embodiments described above can be appropriately combined with each other.

**DESCRIPTION OF REFERENCE CHARACTERS**

11: source domain teacher learned model, 12: student learning model, 13: weight, 14: noise learned model, 15: clean learned model, 21: learned model, 100: learning device, 101: processor, 102: volatile storage device, 103: nonvolatile storage device, 110: acquisition unit, 120: mixture unit, 130: extraction unit, 140: estimation unit, 150: extraction unit, 160: estimation unit, 170: calculation unit, 180: learning unit, 190: output unit, 191: extraction unit, 192: estimation unit, 193: extraction unit, 194: estimation unit, 200: estimation device, 210: acquisition unit, 220: extraction unit, 230: estimation unit, 240: estimation unit, 250: detection unit, 260: extraction unit, 270: estimation unit, 280: extraction unit, 290: estimation unit

**Claims**

1. A learning device that performs learning in an application domain as a learning environment after a source domain as a learning environment, the learning device comprising:

an acquisition unit that acquires a first clean signal, a mixture signal as a signal of a mixture of the first clean signal and a noise signal, and a source domain teacher learned model as a learned model obtained by performing learning in the source domain;
a first extraction unit that extracts a clean feature value as a feature value of the first clean signal by using the first clean signal;

a first estimation unit that estimates a teacher vector representation as a representation obtained by representing information as aggregation of the clean feature value in vector representation by using the source domain teacher learned model and the clean feature value;
a second extraction unit that extracts a mixture feature value as a feature value of the mixture signal by using the mixture signal;
a second estimation unit that estimates a student vector representation as a representation obtained by representing information as aggregation of the mixture feature value in vector representation by using a student learning model whose initial state is a same state as the source domain teacher learned model and the mixture feature value;
a calculation unit that calculates a value based on the teacher vector representation and the student vector representation; and
a learning unit that learns the student learning model by using the value so that estimation by the student learning model becomes closer to estimation by the source domain teacher learned model.

2. The learning device according to claim 1, wherein

the acquisition unit acquires a weight corresponding to the noise signal included in the mixture signal, and
the calculation unit calculates a value based on the weight, the teacher vector representation and the student vector representation.

3. The learning device according to claim 1, further comprising:

a third extraction unit; and
a third estimation unit, wherein
the acquisition unit acquires the noise signal and a noise learned model,
the third extraction unit extracts a noise feature value as a feature value of the noise signal by using the noise signal,
the third estimation unit estimates a noise vector representation as a representation obtained by representing information as aggregation of the noise feature value in vector representation by using the noise learned model and the noise feature value, and
the second estimation unit estimates the student vector representation by using the student learning model, the mixture feature value and the noise vector representation.

4. The learning device according to claim 1, further comprising:

a fourth extraction unit; and
a fourth estimation unit, wherein
the acquisition unit acquires a second clean signal and a clean learned model,
the fourth extraction unit extracts a second clean feature value as a feature value of the second clean signal by using the second clean signal,
the fourth estimation unit estimates a clean vector representation as a representation obtained by representing information as aggregation of the second clean feature value in vector representation by using the clean learned model and the second clean feature value, and
the second estimation unit estimates the student vector representation by using the student learning model, the mixture feature value and the clean vector representation.

5. The learning device according to any one of claims 1 to 4, further comprising an output unit that outputs the clean feature value, the teacher vector representation, the mixture feature value, the student vector representation and the value.

6. A learning method performed by a learning device that performs learning in an application domain as a learning environment after a source domain as a learning environment, the learning method comprising:

acquiring a first clean signal, a mixture signal as a signal of a mixture of the first clean signal and a noise signal, and a source domain teacher learned model as a learned model obtained by performing learning in the source domain, extracting a clean feature value as a feature value of the first clean signal by using the first clean signal, estimating a teacher vector representation as a representation obtained by representing information as aggregation of the clean feature value in vector representation by using the source domain teacher learned model and the clean feature value, extracting a mixture feature value as a feature value of the mixture signal by using the mixture signal, estimating a student vector representation as a representation obtained by representing information as aggregation of the mixture feature value in vector representation by using a student learning model whose initial state is a same state as the source domain teacher learned model and the mixture feature value;
calculating a value based on the teacher vector representation and the student vector representation; and
learning the student learning model by using the value so that estimation by the student learning model becomes closer to estimation by the

**EP 4 703 974 A1**

source domain teacher learned model.

7. A learning program that causes a computer, performing learning in an application domain as a learning environment after a source domain as a learning environment, to execute a process of:

acquiring a first clean signal, a mixture signal as a signal of a mixture of the first clean signal and a noise signal, and a source domain teacher learned model as a learned model obtained by performing learning in the source domain, extracting a clean feature value as a feature value of the first clean signal by using the first clean signal, estimating a teacher vector representation as a representation obtained by representing information as aggregation of the clean feature value in vector representation by using the source domain teacher learned model and the clean feature value, extracting a mixture feature value as a feature value of the mixture signal by using the mixture signal, estimating a student vector representation as a representation obtained by representing information as aggregation of the mixture feature value in vector representation by using a student learning model whose initial state is a same state as the source domain teacher learned model and the mixture feature value;
calculating a value based on the teacher vector representation and the student vector representation; and
learning the student learning model by using the value so that estimation by the student learning model becomes closer to estimation by the source domain teacher learned model.

# FIG. 1

ESTIMATION DEVICE  200

LEARNING DEVICE  100

# FIG. 2

LEARNING DEVICE  100

PROCESSOR  101

VOLATILE STORAGE DEVICE  102

NONVOLATILE STORAGE DEVICE  103

FIG. 3

100 LEARNING DEVICE

SOURCE DOMAIN
TEACHER
LEARNED MODEL — 11

LEARNING
UNIT — 180

STUDENT
LEARNING MODEL — 12

ESTIMATION
UNIT — 140

CALCULATION
UNIT — 170

ESTIMATION
UNIT — 160

EXTRACTION
UNIT — 130

OUTPUT UNIT — 190

EXTRACTION
UNIT — 150

ACQUISITION UNIT — 110

MIXTURE UNIT — 120

CLEAN SIGNAL

NOISE SIGNAL

EP 4 703 974 A1

# FIG. 4

START

↓ S11

ACQUIRE CLEAN SIGNAL AND OTHER DATA

↓ S12

EXTRACT CLEAN FEATURE VALUE

↓ S13

ESTIMATE TEACHER VECTOR REPRESENTATION

↓ S14

EXTRACT MIXTURE FEATURE VALUE

↓ S15

ESTIMATE STUDENT VECTOR REPRESENTATION

↓ S16

CALCULATION

↓ S17

LEARN STUDENT LEARNING MODEL

↓ S18

OUTPUT CLEAN FEATURE VALUE AND OTHER DATA

↓

END

# FIG. 5

LABEL

ESTIMATION
DEVICE                                                    200

LEARNED MODEL    21

STUDENT
LEARNING MODEL    12

MIXTURE SIGNAL

ACQUISITION
UNIT    210

ESTIMATION
UNI    240

ESTIMATION
UNI    230

EXTRACTION
UNIT    220

EP 4 703 974 A1

# FIG. 6

START

↓

ACQUIRE MIXTURE SIGNAL AND OTHER DATA — S21

↓

EXTRACT MIXTURE FEATURE VALUE — S22

↓

ESTIMATE VECTOR REPRESENTATION — S23

↓

ESTIMATE LABEL — S24

↓

END

FIG. 7

# FIG. 8

START

↓

ACQUIRE CLEAN SIGNAL AND OTHER DATA — S11a

↓

EXTRACT CLEAN FEATURE VALUE — S12

↓

ESTIMATE TEACHER VECTOR REPRESENTATION — S13

↓

EXTRACT MIXTURE FEATURE VALUE — S14

↓

ESTIMATE STUDENT VECTOR REPRESENTATION — S15

↓

CALCULATION — S16a

↓

LEARN STUDENT LEARNING MODEL — S17

↓

OUTPUT CLEAN FEATURE VALUE AND OTHER DATA — S18

↓

END

FIG. 9

EP 4 703 974 A1

# FIG. 10

```
                    ( START )
                        │
                        ▼                          ┌─ S11b
        ┌───────────────────────────────────────┐
        │   ACQUIRE CLEAN SIGNAL AND OTHER DATA  │
        └───────────────────────────────────────┘
                        │
                        ▼                          ┌─ S12
        ┌───────────────────────────────────────┐
        │       EXTRACT CLEAN FEATURE VALUE      │
        └───────────────────────────────────────┘
                        │
                        ▼                          ┌─ S13
        ┌───────────────────────────────────────┐
        │   ESTIMATE TEACHER VECTOR REPRESENTATION │
        └───────────────────────────────────────┘
                        │
                        ▼                          ┌─ S14
        ┌───────────────────────────────────────┐
        │      EXTRACT MIXTURE FEATURE VALUE     │
        └───────────────────────────────────────┘
                        │
                        ▼                          ┌─ S14a
        ┌───────────────────────────────────────┐
        │       EXTRACT NOISE FEATURE VALUE      │
        └───────────────────────────────────────┘
                        │
                        ▼                          ┌─ S14b
        ┌───────────────────────────────────────┐
        │    ESTIMATE NOISE VECTOR REPRESENTATION │
        └───────────────────────────────────────┘
                        │
                        ▼                          ┌─ S15a
        ┌───────────────────────────────────────┐
        │   ESTIMATE STUDENT VECTOR REPRESENTATION │
        └───────────────────────────────────────┘
                        │
                        ▼                          ┌─ S16
        ┌───────────────────────────────────────┐
        │              CALCULATION               │
        └───────────────────────────────────────┘
                        │
                        ▼                          ┌─ S17
        ┌───────────────────────────────────────┐
        │       LEARN STUDENT LEARNING MODEL     │
        └───────────────────────────────────────┘
                        │
                        ▼                          ┌─ S18
        ┌───────────────────────────────────────┐
        │    OUTPUT CLEAN FEATURE VALUE AND      │
        │             OTHER DATA                 │
        └───────────────────────────────────────┘
                        │
                        ▼
                     ( END )
```

# FIG. 11

LABEL

ESTIMATION DEVICE — 200

LEARNED MODEL — 21

STUDENT LEARNING MODEL — 12

MIXTURE SIGNAL

NOISE LEARNED MODEL — 14

ACQUISITION UNIT — 210

ESTIMATION UNIT — 240

ESTIMATION UNIT — 230

ESTIMATION UNIT — 270

EXTRACTION UNIT — 220

EXTRACTION UNIT — 260

DETECTION UNIT — 250

EP 4 703 974 A1

# FIG. 12

```
        ┌─────────────┐
        │    START    │
        └──────┬──────┘
               │
               ▼                                    ⌒ S21a
   ┌────────────────────────────────────────┐
   │  ACQUIRE MIXTURE SIGNAL AND OTHER DATA  │
   └────────────────────┬───────────────────┘
                        │
                        ▼                           ⌒ S22
   ┌────────────────────────────────────────┐
   │      EXTRACT MIXTURE FEATURE VALUE      │
   └────────────────────┬───────────────────┘
                        │
                        ▼                           ⌒ S22a
   ┌────────────────────────────────────────┐
   │           DETECT NOISE SIGNAL           │
   └────────────────────┬───────────────────┘
                        │
                        ▼                           ⌒ S22b
   ┌────────────────────────────────────────┐
   │       EXTRACT NOISE FEATURE VALUE       │
   └────────────────────┬───────────────────┘
                        │
                        ▼                           ⌒ S22c
   ┌────────────────────────────────────────┐
   │   ESTIMATE NOISE VECTOR REPRESENTATION  │
   └────────────────────┬───────────────────┘
                        │
                        ▼                           ⌒ S23a
   ┌────────────────────────────────────────┐
   │      ESTIMATE VECTOR REPRESENTATION     │
   └────────────────────┬───────────────────┘
                        │
                        ▼                           ⌒ S24
   ┌────────────────────────────────────────┐
   │             ESTIMATE LABEL              │
   └────────────────────┬───────────────────┘
                        │
                        ▼
                ┌─────────────┐
                │     END     │
                └─────────────┘
```

FIG. 13

# FIG. 14

```
                    START

                                        S11c
        ACQUIRE FIRST CLEAN SIGNAL AND OTHER DATA

                                        S12
            EXTRACT CLEAN FEATURE VALUE

                                        S13
        ESTIMATE TEACHER VECTOR REPRESENTATION

                                        S14
            EXTRACT MIXTURE FEATURE VALUE

                                        S14c
          EXTRACT SECOND CLEAN FEATURE VALUE

                                        S14d
         ESTIMATE CLEAN VECTOR REPRESENTATION

                                        S15b
       ESTIMATE STUDENT VECTOR REPRESENTATION

                                        S16
                  CALCULATION

                                        S17
            LEARN STUDENT LEARNING MODEL

                                        S18
           OUTPUT CLEAN FEATURE VALUE AND
                     OTHER DATA

                     END
```

# FIG. 15

# FIG. 16

START

ACQUIRE MIXTURE SIGNAL AND OTHER DATA — S21b

EXTRACT MIXTURE FEATURE VALUE — S22

EXTRACT CLEAN FEATURE VALUE — S22d

ESTIMATE CLEAN VECTOR REPRESENTATION — S22e

ESTIMATE VECTOR REPRESENTATION — S23b

ESTIMATE LABEL — S24

END

## INTERNATIONAL SEARCH REPORT

| International application No. |
| --- |
| **PCT/JP2023/019481** |

| A. | CLASSIFICATION OF SUBJECT MATTER |
| --- | --- |

**G06N 3/096**(2023.01)i
FI:   G06N3/096

According to International Patent Classification (IPC) or to both national classification and IPC

| B. | FIELDS SEARCHED |
| --- | --- |

Minimum documentation searched (classification system followed by classification symbols)

G06N3/096

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | JP 2022-527527 A (TENCENT TECHNOLOGY (SHENZHEN) COMPANY, LIMITED) 02 June 2022 (2022-06-02)<br>paragraphs [0038], [0039], [0072]-[0090] | 1-7 |
| A | JP 2021-135585 A (HITACHI, LTD.) 13 September 2021 (2021-09-13)<br>paragraphs [0074]-[0090] | 1-7 |
| A | JP 2020-64609 A (GENERAL ELECTRIC CO.) 23 April 2020 (2020-04-23)<br>paragraph [0094] | 1-7 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **28 July 2023** | **08 August 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/019481**

| Patent document cited in search report | | | Publication date (day/month/year) | Patent family member(s) | | | Publication date (day/month/year) |
|---|---|---|---|---|---|---|---|
| JP | 2022-527527 | A | 02 June 2022 | US | 2022/0013133 | A1 | |
| | | | | paragraphs [0043], [0044], [0076]-[0095] | | | |
| | | | | WO | 2021/057239 | A1 | |
| | | | | EP | 3920183 | A1 | |
| | | | | CN | 110648680 | A | |
| JP | 2021-135585 | A | 13 September 2021 | WO | 2021/171682 | A1 | |
| JP | 2020-64609 | A | 23 April 2020 | US | 2020/0065940 | A1 | |
| | | | | paragraph [0112] | | | |
| | | | | EP | 3633601 | A1 | |
| | | | | CN | 110858391 | A | |
| | | | | KR | 10-2020-0026071 | A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2016143125 A

### Non-patent literature cited in the description

- **YUKI TAKASHIMA et al.** Preventing Catastrophic Forgetting by Partial Fine-tuning for Continual Learning of End-to-End ASR. *Proceedings of the Autumn Meeting of the Acoustical Society of Japan*, 2022
- **ASHISH VASWANI et al.** Attention Is All You Need. *Proc. IPS*, 2017
- **RYO AIHARA et al.** Deep clustering-based single-channel speech separation and recent advances. *Acoust. Sci. & Tech.*, vol. 41 (2), 2020
- **ETHAN PEREZ et al.** FiLM: Visual Reasoning with a General Conditioning Layer. *Proc. AAAI*, 20018